(19) **Europäisches Patentamt**
European Patent Office
Office européen des brevets

(11) **EP 1 472 124 B1**

(12) **EUROPÄISCHE PATENTSCHRIFT**

(45) Veröffentlichungstag und Bekanntmachung des Hinweises auf die Patenterteilung:
**20.10.2010 Patentblatt 2010/42**

(21) Anmeldenummer: **03708055.3**

(22) Anmeldetag: **14.01.2003**

(51) Int Cl.:
***B60T 8/175*** *(2006.01)*

(86) Internationale Anmeldenummer:
**PCT/EP2003/000248**

(87) Internationale Veröffentlichungsnummer:
**WO 2003/064227 (07.08.2003 Gazette 2003/32)**

(54) **VERFAHREN ZUR TRAKTIONSREGELUNG SCHLUPFBEHAFTETER RÄDER WENIGSTENS EINER ANTRIEBSACHSE**

TRACTION CONTROL METHOD FOR SLIPPING WHEELS OF AT LEAST ONE DRIVING AXLE

PROCEDE DE REGULATION DE LA TRACTION DE ROUES D'AU MOINS UN ESSIEU MOTEUR, SOUMISES AU PATINAGE

(84) Benannte Vertragsstaaten:
**DE FR IT**

(30) Priorität: **28.01.2002 DE 10203422**

(43) Veröffentlichungstag der Anmeldung:
**03.11.2004 Patentblatt 2004/45**

(73) Patentinhaber: **Continental Teves AG & Co. oHG 60488 Frankfurt am Main (DE)**

(72) Erfinder:
• **Schafiyha, Schahrad**
  **65929 Frankfurt am Main (IR)**
• **RAULFS, Henning**
  **61352 Bad Homburg (DE)**
• **DRESCH, Carsten**
  **71634 Ludwigsburg (DE)**

(56) Entgegenhaltungen:
| DE-A- 3 234 282 | DE-A- 3 932 567 |
| DE-A- 4 433 459 | DE-A- 19 953 773 |
| DE-C- 4 418 773 | US-A- 5 719 770 |

**Beschreibung**

Stand der Technik

Zur Vermeidung durchdrehender Antriebsräder ist es im Rahmen einer Traktionsregelung bekannt, einen Radbremseingriff und gegebenenfalls einen zusätzlichen Eingriff in ein Motormanagement vorzusehen. Der Radbremseingriff erfolgt an antriebsschlupfbehafteten Rädern und ermöglicht eine Differentialsperrwirkung. Diese Vorgehensweise beruht auf der Überlegung, das antriebsschlupfbehaftete Rad anhand eines gezielten Bremsmomentes auf eine Drehgeschwindigkeit mit günstigem, vorgegebenen Antriebsschlupf zu verzögern, so daß anhand eines offenen Differentialgetriebe das einerseits aufgebrachte Bremsmoment als zusätzliches Antriebsmoment an dem anderen, gegenüberliegenden Rad zur Verfügung steht. Einzelheiten gehen aus dem Fachbuch Fahrsicherheitssysteme, 2. Aufl. Vieweg 1998, S. 75 ff hervor.

Aus der DE 34 21 776 C2 geht ein Fahrzeug mit Allradantrieb hervor, wobei sowohl die Räder einer Achse mit der Antriebswelle als auch die Antriebswellen mit dem Antriebsmotor über Ausgleichsgetriebe verbunden sind. Es wird eine elektronische Differentialsperrwirkung erzielt, indem radindividuell an antriebsschlupfbehafteten Rädern ein Bremsdruck eingespeist wird. Mit anderen Worten erfolgt bei erkanntem Antriebsschlupf eine fahrerunabhängige Bremsung mit einem entsprechenden Bremsmoment zur Reduktion des wirksamen Antriebsdrehmomentes am durchdrehenden Rad. Die Dosierung und Modulation des Bremsmomentes basiert auf einer radindividuellen Schlupfregelung.

Aus der Fachzeitschrift ATZ 102(2000) Nr. 9, S. 764 - 773 ist ein Traktionsregelungsverfahren zur Verwendung bei offenen Differentialen bekannt, wobei - wie bei einer Antiblockier-Regelung - durch Auswertung von Raddrehzahlsignalen erkannt wird, ob sich die Räder noch in einem vorgegebenen Schlupfbereich befinden. Im Rahmen der Traktionsregelung erfolgt ein Bremseingriff an Rädern, welche die Schlupfschwelle überschreiten. Mittels aktivem Bremsdruckaufbau kann hoher Antriebsschlupf an jeweils diagonal gegenüberliegenden Antriebsrädern verhindert werden.

Ein Verfahren zur Erkennung sogenannter Verschränkungszustände mit diagonal gegenüberliegenden schlupfenden Antriebsrädern geht aus der DE 199 53 773 A1 hervor. Dieser Schrift ist keinerlei Anregung zu entnehmen, eine - über Verschränkungszustände hinausgehende - Erkennung von Fahrzuständen vorzunehmen.

Es ist eine Aufgabe der vorliegenden Erfindung, die bekannten Regelverfahren bei offenem Differential derart zu verbessern, daß eine beschleunigte Einstellung und Regelung der Differentialsperrwirkung in Abhängigkeit von dem jeweiligen Fahrzustand einschließlich der herrschenden Fahrbedingungen (Reibwertsituation) ermöglicht wird.

Die Aufgabe wird durch die Merkmale des Anspruchs 1 gelöst.

Vorteile der Erfindung

Die Erfindung beruht auf einem Verfahren zur Traktionsregelung schlupfbehafteter Räder von wenigstens einer Antriebsachse, welche über ein offenes Differentialgetriebe angetrieben und mittels Bremseingriff in einem bestimmten, vorgebbaren, Maß zur Bewirkung einer Differentialsperrfunktion miteinander verspannbar sind. Es wird der Radschlupf der Räder erfasst, ein erfaßter Radschlupfverlauf mit vorgegebenen Radschlupfmustern zur Erkennung und Beobachtung eines aktuellen Fahrzustandes verglichen, und bei Übereinstimmung des erfaßten Radschlupfverlaufs mit wenigstens einem vorgegebenen Radschlupfmuster ein, die Differentialsperrfunktion bewirkender, Bremseingriff vorgenommen. Zur schnellen Regelung des Sperrmomentes wird jeweils radindividuell ein adaptiver Druckabbaugradient oder ein adaptiver Druckaufbaugradient in Abhängigkeit von dem erkannten Radschlupfmuster berechnet, wobei die Umsetzung des Druckabbau oder des Druckaufbau durch Anpassung von Puls-Pause-Ventilansteuerungsfolgen erfolgt. Die Erfindung erlaubt auf Basis vertretbaren Aufwands die Durchführung fahrzustandsabhängiger Bremseingriffe mit Differentialsperrfunktion. In Fahrsituationen bei denen gegenüberliegende Antriebsräder durchrutschen ermöglicht die Erfindung eine schnelle und wirkungsvolle Traktionsregelung.

Eine Pause zwischen zwei Druckabbaupulsen oder zwischen zwei Druckaufbaupulsen wird auf Grundlage von Daten betreffend eine Fahrzeugreferenzgeschwindigkeit, des Radschlupfes und gegebenenfalls einer konstanten Basisgröße ermittelt. Zusätzlich kann additiv das Schlupfverhalten der Räder beobachtet werden, wobei in Abhängigkeit von dem Schlupfverhalten eine Progression oder Degression eines Zählers erfolgt. Auch eine Drehmomentdifferenz zwischen einem aktuellen Achsmoment und einem gefilterten Achsmoment sowie Informationen betreffend das Drehverhalten eines Antriebsmotors können Berücksichtigung finden, um ein Abwürgen zu verhindern.

Es hat sich als vorteilhaft erwiesen, wenn der verwendet, vorzugsweise softwarebasierte ektronische Regler auf einem Reglermodell mit jeweils linearen Anteilen (P-Anteile), integrierenden Anteilen (I-Anteile) und gegebenenfalls differenzierenden Anteilen (D-Anteile, Totzeitglieder) beruht, wobei die oben genannten Einflüsse als Störgrößen aufschaltbar sind.

Einem Traktionsverlust wird besonders frühzeitig entgegengewirkt, wenn die Verstärkungsfaktoren ($k_{1-5}, k_p, k_d$) jeweils in Abhängigkeit von dem erkannten Fahrzeugfahrzustand ermittelt werden, und wenn nach Erkennung eines antriebsschlupfbehafteten Fahrzustandes eine Regelschwellenabsenkung an dem schlupfenden Rad(paar) vorgenommen wird.

Zur Plausibilisierung der Differentialsperrfunktion erfolgt ein Überprüfung anhand der Fahrzeugreferenzgeschwindigkeit und anhand einer Kurvenfahrterkennung. Wenn eine Differentialsperre nicht plausibel erscheint, erfolgt deren Deaktivierung. Ferner wird eine Deaktivierung vorgenommen, wenn ein Fahrzustand erkannt wird, bei dem sich alle Räder auf Niedrigreibwert befinden, oder wenn eine Kurvenfahrt vorliegt. Die Kurvenfahrterkennung kann beispielsweise in einfacher Art und Weise anhand einer Überwachung des Lenkwinkels erfolgen.

Gemäß einer vorteilhaften Ausgestaltung der Erfindung ist ergänzend zu der Traktionsregelungsstrategie auf der Grundlage erkannter Fahrzustände auch eine Traktionsregelungsstrategie auf der Grundlage radindividueller Schlupfwerte möglich und vorgesehen, wobei die Regelung auf Basis radindividueller Schlupfwerte erfolgt, wenn die Differentialsperrfunktion deaktiviert wurde, insbesondere wenn ein Fahrzustand erkannt wurde, bei dem sich alle Räder auf Niedrigreibwert befinden.

Um die Ermittlung der Fahrzeugreferenzgeschwindigkeit frei von Traktionsregelungseinflüssen vornehmen zu können, werden die diesbezüglichen Drehinformationen von traktionsgeregelten Rädern nicht berücksichtigt. Wenn ein Traktionsregelungseingriff an allen Fahrzeugrädern vorliegt, wird das Antriebsrad mit dem geringsten traktionsregelungsbedingten Sperrmoment (Bremsmoment) zur Ermittlung der Fahrzeugreferenzgeschwindigkeit herangezogen.

Weitere Vorteile sowie vorteilhafte Ausgestaltungen der Erfindung können der Beschreibung eines Ausführungsbeispiels entnommen werden.

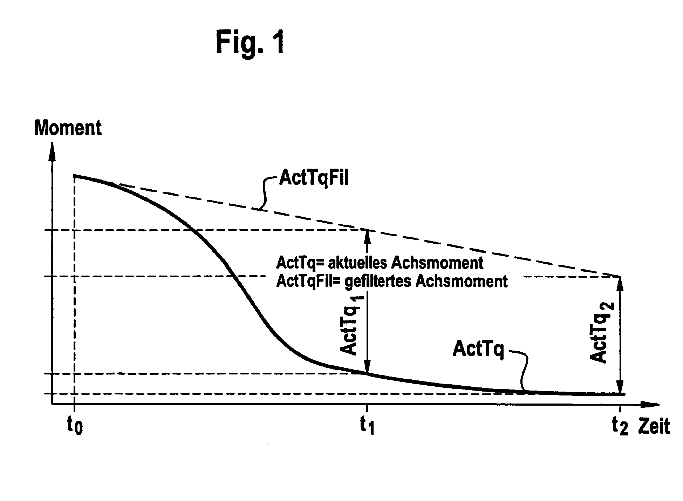

In der Zeichnung zeigt die einzige Fig. 1 ein schematisches Diagramm zur Verdeutlichung einer Differenz zwischen aktuellem und gefiltertem Achsmoment.

Ausführungsbeispiel

Die Erfindung betrifft ein Verfahren zur Traktionsregelung schlupfbehafteter Räder wenigstens einer Antriebsachse eines Kraftfahrzeuges, die über ein offenes Differentialgetriebe angetrieben und mittels Bremseingriff in einem bestimmten, vorgebbaren, Maß zur Bewirkung einer Differentialsperrfunktion miteinander verspannbar sind. Ganz grundsätzlich verfügt ein allradgetriebenes Fahrzeug über Querdifferentialgetriebe zwischen den Rädern einer Antriebsachse. Ein Längsdifferentialgetriebe befindet sich in einer Verbindung zwischen zwei unterschiedlichen Antriebsachsen. Offene Differentialgetriebe fungieren als Drehmomentenwaage, wobei die jeweilige Abtriebsdrehzahl den Bedingungen angepaßt wird. Bei Kurvenfahrt werden beispielsweise unterschiedliche Raddrehzahlen des kurveninneren und des kurvenäußeren Rades einer Achse realisiert. Es versteht sich, daß ergänzend zu einem Bremseingriff auch ein Motorregelungseingriff möglich ist. Motorregelungseingriffe werden als grundsätzlich bekannt vorausgesetzt und bedürfen daher keiner weiteren Erläuterung.

Bei Fahrzeugen mit Allradantrieb können - hauptsächlich beim Anfahren bzw. Befahren von Fahrbahnen mit unterschiedlichen Reibwerten, auf Schlechtwegen oder im Offroadbetrieb - unterschiedliche Fahrsituationen entstehen, welche anhand des Radschlupfverlaufes (abgetragen in Abhängigkeit von der Zeit) erkennbar sind. Es sind ferner Sonderfälle, wie beispielsweise $\mu$-Sprung-Zustände, mit einem oder beiden Rädern einer Achse auf Niedrigreibwert (LM) und den Rädern der anderen Achse auf Hochreibwert (HM), denkbar. Ferner sind $\mu$-Split-Situationen möglich, wobei die Räder einer Fahrzeugseite mit Hochreibwert, und die Räder der anderen Fahrzeugseite mit Niedrigreibwert konfrontiert sind. Darüber hinaus sind Misch- und Sonderformen denkbar, wenn beispielsweise infolge von abgehobenen oder stark von Aufstandkräften entlasteten Räder beispielsweise in Verschränkungen bzw. auf losem Untergrund an einzelnen oder allen angetriebenen durchdrehenden Rädern das eingespeiste Motormoment nicht abgesetzt werden kann, so daß kein Vortrieb entsteht. Es ist deshalb bekannt, an schlupfbehafteten Rädern, welche kein Antriebsmoment übertragen können, mittels fahrerunabhängigem Bremsdruckaufbau ein Sperrmoment (Bremsmoment) aufzubauen, so daß das Antriebsmoment durch nicht oder quantitativ geringer schlupfbehaftete Antriebsräder übertragen werden kann.

Soweit vorliegend von Schlupf gesprochen wird, ist grundsätzlich der anhand von Raddrehzahlsensoren gemessene Bremsschlupf gemeint, welcher prinzipiell Werte zwischen 0 % (frei rollend) und 100 % (blockiert) annehmen kann. Nach vorliegender Terminologie weist der Bremsschlupf - im Unterschied zu einem Antriebsschlupf - jeweils ein negatives Vorzeichen auf. Im Verlauf eines Traktionsregeleingriffs kann der gemessene Schlupf postitiv sein, wenn - beispielsweise nach einem ersten Regelzyklus - zeitweise wieder Antriebsschlupf auftritt.

Um die Traktionsregelung an die genannten Fahrzustände anzupassen, und insbesondere einen adaptiven, das heißt an die Verhältnisse angepaßten (adaptiven) Differentialsperrgrad mit einem bestimmten Sperrmoment einzuregeln, wird der Schlupf der Räder erfasst, und der erfaßte Radschlupfverlauf mit vorgegebenen Radschlupfmustern zur Erkennung und Beobachtung eines aktuellen Fahrzustandes verglichen. Nur bei Übereinstimmung des erfaßten Radschlupfverlaufs mit wenigstens einem vorgegebenen Radschlupfmuster erfolgt ein Bremseingriff mit einer definierten Differentialsperrfunktion. Mit anderen Worten wird adaptiv ein definierter Sperrgrad eingestellt, ohne daß eine radindividuelle Regelung nach einem Sollschlupf erfolgt. Bei fehlender Übereinstimmung erfolgt eine Regelung nach einem vorgegebenen Sollschlupf. Auch wenn ein Schwellwert in Gestalt eines Offroad-Zählers nicht überschritten wird, erfolgt eine Regelung nach dem Sollschlupf. Das Verfahren wird nachfolgend genauer erläutert.

Radschlupfverläufe sind wie folgt einzuteilen:

| kein_oder_drei_Räder_schlupfend | kein eindeutiges Schlupfmuster oder drei Räder in Traktionsregelung |
|---|---|
| ein_Rad_schlupfend | ein Rad in Traktionsregelung |
| alle_Räder_schlupfend | alle Räder in Traktionsregelung, alle Räder auf Schotter, Schlamm oder Niedrigreibwert - Wechsel zu schlupfbasierter Regelung ! |
| erste_Diagonale_schlupfend (Räder 1+3) | diagonal gegenüberliegende Räder vorne links und hinten rechts in Traktionsregelung |
| zweite_Diagonale_schlupfend (Räder 2+4) | diagonal gegenüberliegende Räder vorne rechts und hinten links in Traktionsregelung |
| Vorderachse_schlupfend | μ-Sprung Situation, nur die Räder der Vorderachse in Traktionsregelung |
| Hinterachse_schlupfend | μ-Sprung Situation, nur die Räder der Hinterachse in Traktionsregelung |
| linke_Räder_schlupfend | μ-split Situation, Räder der linken Seite auf low-μ |
| rechte_Räder_schlupfend | μ-split Situation, Räder der rechten Seite auf low-μ |

Die nachfolgenden Vorgänge werden radindividuell durchgeführt. Jedem Fahrzeugrad sind individuelle, und Zählwerte summierende Zähler (Stabilitäts-Zähler, LM-Zähler (für eine Niedrigreibwertsituation)) zugeordnet. Jeder der oben genannten Fahrzustände weist wiederum bestimmte, vorgegebene Zählwerte auf, so daß die Fahrzustände anhand der Zählerstände erkennbar sind. Wenn ein bestimmter Zählerstand (Regelschwelle) innerhalb des jeweiligen Beobachtungszeitraumes überschritten wurde, wird die Differentialsperrenfunktion auf Basis individuell (adaptiv) ermittelter Verstärkungsfaktoren durchgeführt. Anderenfalls wird die Differentialsperrenfunktion verworfen. Die Differentialsperrenfunktion wird ferner bei Unplausibilität verworfen. Ein Zählverfahren für diagonal versetzt zueinander angeordnete, durchrutschende, Räder ist der DE 199 53 773 A1 zu entnehmen. Der diesbezügliche Offenbarungsgehalt wird zur Erkennung von unterschiedlichen Fahrzuständen in vollem Umfang mit einbezogen.

Die Plausibilisierung geschieht wie folgt. Es wird abgefragt, ob eine Kurvenfahrt vorliegt, oder vom Fahrzeugführer gewünscht ist. Dies kann beispielsweise dadurch erfolgen, daß eine Kurvenfahrt anhand der herrschenden Querbeschleunigung unmittelbar mit Hilfe eines Querbeschleunigungssensors gemessen wird. Gemäß einer anderen Variante kann der Lenkwinkel gemessen werden, wobei ein funktionaler Zusammenhang zwischen dem herrschenden Lenkwinkel und der Querbeschleunigung der Kurvenfahrterkennung dient. Schließlich ist es möglich, die Querbeschleunigung aus der Beziehung

$$a_y = \frac{SWA * v_{\text{Ref}}^2}{l} \quad \text{mit}$$

$SWA$ : Lenkwinkel
$v_{\text{Ref}}$ : Fahrzeugreferenzgeschwindigkeit
$l$ : Achsabstand

rechnerisch zu ermitteln.

Wenn erkannt wurde, daß Kurvenfahrt vorliegt, wird die Sperrgradregelung verworfen. Die Sperrgradregelung wird ferner deaktiviert, wenn detektiert wurde, daß sich alle Antriebsräder auf Niedrigreibwert befinden. Die Sperrgradregelung wird auch deaktiviert, wenn beispielsweise auf Basis eines Bremslichtschaltersignals erkannt wurde, daß eine fahrerseitige Bremsbetätigung vorliegt. Für diese Fälle erfolgt eine Regelung auf Basis vorgegebener Schlupfwerte.

Wie ausgeführt wurde, erfolgt in Abhängigkeit von dem erkannten Fahrzustand eine adaptive (Differential) Sperrgradregelung mit einer Sperrmomentmodulation (Bremsmomentmodulation) auf Basis individuell ermittelter Regler-Verstärkungsfaktoren (k-Werte). Die Fahrzustände bzw. Radschlupfmuster werden durch logische Auswertung der Regelphasen beziehungsweise des Radschlupfverlaufs der einzelnen Räder ermittelt, weil ausgewertet wird, wie viele Räder eine Regelschwelle (Schlupfschwelle) innerhalb des vorgegebenen Beobachtungszeitraumes überschritten haben, und in welcher Anordnung diese Räder zueinander stehen. Diese Fahrzustandsbeobachtung läuft kontinuierlich ab, um auf Zustandsänderungen reagieren zu können.

Die adaptive Regelung des Sperrmomentes (Radbremsmomentes) erfolgt jeweils radindividuell anhand eines Druckaufbaugradienten oder Druckabbaugradienten in Abhängigkeit von dem - beispielsweise nach obiger Tabelle ermittelten - Radschlupfmuster. Dabei wird - je nach Erfordernis - der Druckaufbau oder der Druckabbau durch Anpassung von Puls-Pause-Ventilansteuerungsfolgen umgesetzt. Praktisch geht es darum, den an einem schlupfenden Rad eingestellten Bremsdruck auf ein bestimmte Weise verzögert oder verstärkt auf- beziehungsweise abzubauen.

Ein Zeitraum einer Pause zwischen zwei aufeinander folgenden Pulsen betreffend den Druckabbau wird beschrieben durch

$$\Delta T = T_B - k_1 * v_{ref} + k_2 * \lambda_{fil} - k_3 * Stab_{counter} - k_4 * \Delta ActTq - k_5 * \left[ k_p * (N_{soll} - N) + k_d * \Delta N \right]$$

mit

| | |
|---|---|
| $T_B$: | Basisgröße |
| $k_1, k_2\ k_3, k_4, k_5, k_p, k_d$ | Verstärkungsfaktoren |
| $v_{ref}$: | Fahrzeugreferenzgeschwindigkeit |
| $\lambda_{fil}$: | Bremsschlupf (gefiltert) $= \dfrac{v_{ref} - v_{Rad}}{v_{ref}} * 100\ \%$ |
| $v_{Rad}$: | Radgeschwindigkeit |
| $Stab_{counter}$: | Zähler zur Beobachtung des Schlupfverhaltens (Stabilitäts-Zähler) |
| $\Delta ActTq$: $ActTq_{fil}$- $ActTq$: | $ActTq_{fil}$: Achsmoment (gefiltert) |
| $ActTq$: | Achsmoment (aktuell) |
| $N_{soll}$: | Motorsolldrehzahl |
| $N$: | Motoristdrehzahl |
| $\Delta N$: | Motordrehzahländerung |

Wenn es erforderlich ist, kann auch die Intensität eines Puls - dessen Amplitude - , insbesondere ein Druckaufbaugradient in Abhängigkeit von dem Radverhalten angepasst werden.

Der Regler mit Störgrößenaufschaltung verfügt über lineare (P-) Anteile, integrale (I-) Anteile sowie bedämpfte (D-) Anteile.

Wie aus obiger Gleichung hervorgeht, ist eine Abbaupause zunächst abhängig von der konstanten Basisgröße $T_B$, sowie von dem gefilterten Radschlupf $\lambda_{fil}$ und der Fahrzeugreferenzgeschwindigkeit $v_{ref}$. Es ist (tendenziell) eine Verringerung der Pausenzeit $\Delta T$ vorgesehen, wenn die Fahrzeugreferenzgeschwindigkeit $v_{ref}$ ansteigt, oder sich der Schlupf $\lambda_{fil}$ erhöht. Weiterhin kann das Radschlupfverhalten anhand des Zählers $Stab_{counter}$ berücksichtigt werden. Der Zähler wird erhöht, wenn der gemessene Schlupf $\lambda_{fil}$ innerhalb vorgegebener Schlupfbänder - welche Regelschwellen oberhalb sowie unterhalb einer Fahrzeugreferenz definieren - liegt. Ist dies nicht der Fall - bei außerhalb der Schlupfbänder liegenden Schlupfwerten - wird der Zähler verringert. Dadurch wird eine Überwachung der Eigenstabilität vermeintlich traktionsloser Räder ermöglicht. Es ist hinzuzufügen, daß die Regelschwellen innerhalb einer Traktionsregelung für die betroffenen Räder abgesenkt werden. Mit anderen Worten werden die genannten Schlupfbänder schmaler ausgebildet, um einem Traktionsverlust frühzeitig entgegenzuwirken. Sofern die Regelschwellen nach der Absenkung überschritten werden, erfolgt ein radindividueller Druckaufbau mit einem adaptiv - auf Basis der aktuell herrschenden Bedingungen - ermittelten Druckaufbaugradienten, um dadurch das erforderliche Sperrmoment wieder aufzubauen, und den Schlupf traktionsloser Räder in dem definierten Band um die Fahrgeschwindigkeit zu halten.

Als weitere aufschaltbare Störgröße ist die Raddrehmomentdifferenz $\Delta 4ctTq$ vorgesehen. Diese Größe berücksichtigt ein dynamisches Gleichgewicht sowie eine Änderung des Gleichgewichtes zwischen dem aktuell abgegebenen Motormoment und dem aufgebrachten Sperrmoment (Bremsmoment) für den Fall, daß das aktuelle Achsmoment $ActTg$ kleiner als das gefilterte Achsmoment $ActTq_{fil}$ ist. Durch diese Größe wird es ermöglicht, die Pausenzeit für einen Druckabbau in Abhängigkeit von der Dynamik des vom Fahrer nachgefragten Antriebsmoments zu beeinflussen. Wenn der Fahrzeugführer beispielsweise spontan das nachgefragte Antriebsmoment infolge gaswegnehmen reduziert, wie dies in Fig. 1 schematisch skizziert ist, liegt zu einem Zeitpunkt $t_1$ ein $\Delta ActTq$ vor, welches dazu beiträgt, die Pausenzeit $\Delta T$ zusätzlich zu verringern. Umgekehrt wird die Pausenzeit $\Delta T$ durch allmähliches gaswegnehmen nur gering oder nicht beeinflußt, denn zu einem fiktiven Zeitpunkt $t_2$ nach der Gaswegnahme bei $t_0$ hat sich der Wert von $ActTq_{fil}$ aufgrund einer weitgehend linear abfallenden Charakteristik bereits stark an den Wert von $ActTq$ angenähert. Folglich führt die gebildete Differenz zu einer geringeren Beeinflussung der Pausenzeit $\Delta T$.

Von besonderer Bedeutung ist die Beobachtung der Motordrehzahl $N$ unter Beachtung der Drehzahländerung, um ein Abwürgen des Antriebsmotors infolge Traktionsregeleingriff zu vermeiden. Die Berücksichtigung dieser Stellreserve erfolgt auf Basis eines PD-Regelansatz anhand entsprechender Verstärkungsfaktoren mit einem Term, welcher maßgeblich auf eine Gewichtung der Differenz zwischen der Motorsolldrehzahl $N_{soll}$ und der Motoristdrehzahl $N$ und auf die erkannte Motordrehzahländerung $\Delta N$ abzielt. Wie zu ersehen ist, wird eine Pausenzeit $\Delta T$ für einen Druckabbau reduziert, wenn die Motoristdrehzahl $N$ unter die Motorsolldrehzahl $N_{soll}$ absinkt. Falls der Motor dennoch Abwürgetendenz zeigt, wird die Sollschlupfvorgabe linear erhöht, und gegebenenfalls der Durckaufbaugradient reduziert. In drastischen Fällen ist es möglich in eine Traktionsregelstrategie auf Basis einer Sollschlupfvorgabe zu wechseln. Zur Funktion eines Abwürgeschutz sei in diesem Zusammenhang auf die DE 100 27 628 A1 hingewiesen, welche diesbezüglich in vollem Umfang einbezogen wird.

Wie aus der vorstehenden Gleichung zu ersehen ist, werden die Einflußgrößen von der Basisgröße $T_B$ subtrahiert, um zu der Pausenzeit $\Delta T$ zu gelangen. Auch die anhand des Schlupfes $\lambda_{fil}$ eingehende Größe wird - wegen ihres negativen Vorzeichens (während einer Traktionsregelung tritt Bremsschlupf mit negativem Vorzeichen auf) - letztendlich von der Basisgröße $T_B$ subtrahiert.

Bei der bevorzugten Ausführungsform der Erfindung ist nicht nur eine Traktionsregelstrategie auf der Grundlage erkannter Fahrzustände (adaptive Sperrgradregelung), sondern eine weitere Traktionsregelstrategie auf der Grundlage radindividueller Schlupfwerte vorgesehen. Wenn die Bedingungen für die Fahrzustands-Strategie (adaptive Sperrgradregelung) nicht vorliegen, wird diese deaktiviert, und auf die Traktionsregelstrategie auf Grundlage der Schlupfwerte $\lambda_{fil}$ umgeschaltet. Es versteht sich, daß ausgehend von der Traktionsregelstrategie auf Grundlage der Schlupfwerte $\lambda_{fil}$ wieder zu einer Sperrgradregelung zurückgewechselt werden kann, wenn der Offroad-Zähler ein entsprechendes Ergebnis liefert. Um nach Abschluß eines Traktionsregelungmodus schnell wieder in diesen zurückwechseln zu können, bietet es sich an, den Beobachtungszeitraum nach Vollendung des vorangegangenen Traktionsregelungseingriffs zu verkürzen.

Traktionsregeleingriffe können prinzipbedingt Auswirkungen auf den gemessenen Radschlupf $\lambda$ und folglich auf die daraus ermittelt Fahrzeugreferenzgeschwindkeit $v_{ref}$ aufweisen. Denn die Umfangsgeschwindigkeit $v_{Rad}$ eines in einem Traktionsregelmodus befindlichen, überbremsten Antriebsrades unterscheidet sich signifikant von der Umfangsgeschwindigkeit eines synchron mit der Fahzeuggeschwindigkeit abrollenden Rades. In der Folge kann eine zu geringe Fahrzeugreferenzgeschwindigkeit $v_{ref}$ ermittelt werden. Anders ausgedrückt reduziert ein, infolge Traktionsregelungseingriff, überbremstes Antriebsrad die Fahrzeugreferenzgeschwindigkeit, was zu Fehlregelungen führen kann. Deshalb ist vorgesehen, daß die Drehsignale von traktionsgeregelten Antriebsrädern nicht zur Ermittlung der Fahrzeugreferenzgeschwindigkeit herangezogen werden, und daß bei Erkennung eines Traktionsregelungseingriffs an allen Rädern das Antriebsrad mit dem geringsten traktionsregelungsbedingten Sperrmoment (Bremsmoment) zur Ermittlung der Fahrzeugreferenzgeschwindigkeit $v_{ref}$ herangezogen wird. Um die Fahrzeugreferenzgeschwindigkeit an die tatsächlichen Bedingungen anzunähern, kann ein negativer Druckgradient auf Grundlage der Annahme erhöht werden, daß bei vier schlupfenden Rädern die zuvor ermittelte Fahrzeugreferenzgeschwindigkeit um ein bestimmtes Maß zu hoch lag.

## Patentansprüche

1.     Verfahren zur Traktionsregelung schlupfbehafteter Räder wenigstens einer Antriebsachse, welche über ein offenes Differentialgetriebe angetrieben und mittels Bremseingriff in einem bestimmten, vorgebbaren, Maß zur Bewirkung einer Differentialsperrfunktion miteinander verspannbar sind, wobei der Radschlupf der Räder erfasst wird, ein erfaßter Radschlupfverlauf mit vorgegebenen Radschlupfmüstern zur Erkennung und Beobachtung eines aktuellen Fahrzustandes verglichen wird, und bei Übereinstimmung des erfaßten Radschlupfverlaufs mit wenigstens einem vorgegebenen Radschlupfmuster ein, die Differentialsperrfunktion bewirkender, Bremseingriff vorgenommen wird, **dadurch gekennzeichnet, daß** zur Regelung des Radbremsmomentes jeweils radindividuell ein adaptiver Druckabbaugradient oder ein adaptiver Druckaufbaugradient in Abhängigkeit von dem erkannten Radschlupfmuster berechnet wird, und daß der Druckabbau oder der Druckaufbau durch Anpassung von Puls-Pause-Ventilansteuerungsfolgen umgesetzt wird, wobei eine Pause zwischen zwei Druckabbaupulsen als Funktion einer Fahrzeugreferenzgeschwindigkeit und des Radschlupfes und gegebenenfalls einer konstanten Basisgröße nach der Beziehung

$$\Delta T = T_B - k_1 * v_{ref} + k_2 * \lambda_{fil}$$

mit

$T_B$ : Basisgröße
$k_1, k_2$ : Verstärkungsfaktoren
$v_{ref}$ : Fahrzeugreferenzgeschwindigkeit
$\lambda_{fil}$ : Radschlupf (gefiltert)

ermittelt wird.

2. Verfahren nach Anspruch 1, **dadurch gekennzeichnet, daß** für die Ermittlung der Pause als subtraktiver Anteil das Schlupfverhalten der Räder beobachtet wird, und daß in Abhängigkeit von dem Schlupfverhalten eine Progression oder Degression eines Zählers nach der Bedingung

$$k_3 * Stab_{counter}$$

mit

$k_3$ : Verstärkungsfaktor
$Stab_{counter}$ : Zähler zur Beobachtung des Schlupfverhaltens

vorgenommen wird.

3. Verfahren nach Anspruch 1 oder 2, **dadurch gekennzeichnet, daß** subtraktiv ein eine Drehmomentdifferenz zwischen einem aktuellen Achsmoment und einem gefilterten Achsmoment beschreibender Anteil nach der Bedingung

$$k_4 * \Delta ActTq$$

mit $\Delta ActTq = ActTq_{fil} - ActTq$ und

$k_4$ : Verstärkungsfaktor
$ActTq_{fil}$ : Achsmoment (gefiltert)
$ActTq$ : Achsmoment (aktuell)

berücksichtigt wird.

4. Verfahren nach Anspruch 1, 2 oder 3, **dadurch gekennzeichnet, daß** subtraktiv die Motordrehzahl und die Motordrehzahländerung nach der Bedingung

$$k_5 \left[ k_p * (N_{soll} - N) + k_d * \Delta N \right] mit$$

$k_5, k_p, k_d$ : Verstärkungsfaktoren
$N_{soll}$ : Motorsolldrehzahl
$N$ : Motoristdrehzahl
$\Delta N$ : Motordrehzahländerung

berücksichtigt wird.

5.  Verfahren nach Anspruch 1, 2, 3 oder 4, **dadurch gekennzeichnet, daß** der elektronische Regler auf einem Reglermodell mit linearen Anteilen (P-Anteile) und integralen Anteilen (I-Anteile) und gegebenenfalls differentiellen Anteilen (D-Anteil, Totzeitglieder) beruht.

6.  Verfahren nach 1, 2, 3 oder 4, **dadurch gekennzeichnet, daß** die Verstärkungsfaktoren ($k_{1-5}, k_p, k_d$) in Abhängigkeit von dem erkannten Fahrzeugfahrzustand ermittelt werden.

7.  Verfahren nach Anspruch 1, **dadurch gekennzeichnet, daß** nach Erkennung eines antriebsschlupfbehafteten Fahrzustands eine Regelschwellenabsenkung vorgenommen wird.

8.  Verfahren nach Anspruch 1, **dadurch gekennzeichnet, daß** die Differentialsperrfunktion anhand der Fahrzeugreferenzgeschwindigkeit und anhand einer Kurvenfahrterkennung plausibilisiert wird, und daß bei Unplausiblität eine Deaktivierung der Differentialsperrenfunktion erfolgt.

9.  Verfahren nach Anspruch 1, **dadurch gekennzeichnet, daß** die Differentialsperrfunktion deaktiviert wird, wenn ein Fahrzustand erkannt wird, bei dem sich alle Räder auf Niedrigreibwert befinden, oder wenn auf Kurvenfahrt erkannt wird.

10. Verfahren nach Anspruch 8 oder 9, **dadurch gekennzeichnet, daß** ergänzend zu der Traktionsregelungsstrategie auf der Grundlage erkannter Fahrzustände eine Traktionsregelungsstrategie auf der Grundlage radindividueller Schlupfwerte vorgesehen ist, und daß die Regelung auf Basis radindividueller Schlupfwerte erfolgt, wenn die Differentialsperrfunktion deaktiviert wurde, insbesondere wenn ein Fahrzustand erkannt wurde, bei dem sich alle Räder auf Niedrigreibwert befinden.

11. Verfahren nach Anspruch 1, **dadurch gekennzeichnet, daß** die Drehinformationen von traktionsgeregelten Antriebsrädern nicht zur Ermittlung der Fahrzeugreferenzgeschwindigkeit herangezogen werden, und daß bei Erkennung eines Traktionsregelungseingriffs an allen Rädern das Antriebsrad mit dem geringsten traktionsregelungsbedingten Bremsmoment zur Ermittlung der Fahrzeugreferenzgeschwindigkeit herangezogen wird.

**Claims**

1.  Traction control method for slipping wheels of at least one driving axle which are driven via an open differential gear and can be clamped to one another by means of a braking intervention to a specific, predefinable degree in order to bring about a differential locking function, wherein the wheel slip of the wheels is detected, a detected wheel slip profile is compared with predefined wheel slip patterns for the detection and observation of a current driving state, and, when the detected wheel slip profile corresponds to at least one predefined wheel slip pattern, a braking intervention which brings about the differential locking function is performed, **characterized in that**, in order to regulate the wheel braking torque, an adaptive pressure reduction gradient or an adaptive pressure buildup gradient is calculated in each case on a wheel-specific basis as a function of the detected wheel slip pattern, and **in that** the pressure reduction or the pressure buildup is implemented by adapting the duty ratio-valve actuation sequences, wherein an interval between two pressure reduction pulses is determined as a function of a reference speed of the vehicle and of the wheel slip and, if appropriate, a constant basic variable according to the relationship

$$\Delta T = T_B - k_1 * v_{ref} + k_2 * \lambda_{fil}$$

    where

    $T_B$ : Basic variable
    $k_1$, $k_2$ : Gain factors
    $v_{ref}$ : Reference speed of the vehicle
    $\lambda_{fil}$ : Wheel slip (filtered).

2.  Method according to Claim 1, **characterized in that** the slip behaviour of the wheels is observed as a subtractive component for the determination of the interval, and **in that** as a function of the slip behaviour a counter is progressed or degressed according to the condition

$$k_3 * Stab_{counter}$$

where

$k_3$: Gain factor
$Stab_{counter}$ : Counter for observing the slip behaviour.

3. Method according to Claim 1 or 2, **characterized in that** a component which describes a torque difference between a current axle torque and a filtered axle torque is taken into account subtractively according to the condition

$$k_4 * \Delta ActTq$$

where

$\Delta ActTq = ActTq_{fil} - ActTq$ and
$k_4$ : Gain factor
$ActTq_{fil}$ : Axle torque (filtered)
$ActTq$ : Axle torque (current).

4. Method according to Claim 1, 2 or 3, **characterized in that** the engine speed and the change in the engine speed are taken into account subtractively according to the condition

$$k_5 \left[ k_p * ( N_{setp} - N ) + k_d * \Delta N \right]$$

where

$k_5, k_p, k_4$ : Gain factors
$N_{setp}$ : Engine setpoint speed
$N$ : Engine actual speed
$\Delta N$ : Change in engine speed.

5. Method according to Claim 1, 2, 3 or 4, **characterized in that** the electronic controller is based on a controller model with linear components (P components) and integral components (I components), and, if appropriate, differential components (D component, lag time elements).

6. Method according to Claim 1, 2, 3 or 4, **characterized in that** the gain factors ($k_{1-5}$, $k_p$, $k_d$) are determined as a function of the detected vehicle driving state.

7. Method according to Claim 1, **characterized in that** after detection of a driving state with drive slip a reduction in the control threshold is carried out.

8. Method according to Claim 1, **characterized in that** the plausibility of the differential locking function is checked on the basis of the reference speed of the vehicle and on the basis of detection of cornering, and **in that** the differential locking function is deactivated in the case of implausibility.

9. Method according to Claim 1, **characterized in that** the differential locking function is deactivated if a driving state is detected in which all the wheels are at a low value of coefficient of friction or if cornering is detected.

10. Method according to Claim 8 or 9, **characterized in that**, in addition to the traction control strategy on the basis of detected driving states, a traction control strategy on the basis of wheel-specific slip values is provided, and **in that** the control is carried out on the basis of wheel-specific slip values if the differential locking function has been deactivated, in particular if a driving state has been detected in which all the wheels are at a low value of the coefficient of friction.

11. Method according to Claim 1, **characterized in that** the rotational information from traction-controlled driving wheels is not used to determine the reference speed of the vehicle, and **in that**, when a traction control intervention is detected at all the wheels, the driven wheel with the lowest traction-control-induced braking torque is used to determine the reference speed of the vehicle.

**Revendications**

1. Procédé pour la régulation de la traction de roues soumises au patinage d'au moins un essieu moteur, qui sont entraînées au moyen d'un engrenage différentiel ouvert et peuvent être sollicitées au moyen d'application de frein dans une proportion définie et prédéfinissable pour l'obtention d'une fonction de blocage de différentiel, le patinage des roues étant enregistré, une courbe de patinage de roue enregistrée étant comparée avec des modèles de patinage de roue prédéfinis pour l'identification et l'observation d'un état de conduite actuel, et une application de frein, réalisant la fonction de blocage de différentiel, étant effectuée en cas de concordance de la courbe de patinage de roue enregistrée avec au moins un modèle de patinage de roue prédéfini, **caractérisé en ce que**, pour la régulation du couple de freinage de roue, à chaque fois un gradient adaptatif de réduction de pression ou un gradient adaptatif d'établissement de pression est calculé de manière individuelle par roue en fonction du modèle de patinage de roue identifié, et **en ce que** la réduction de pression ou l'établissement de pression est mis(e) en oeuvre par adaptation de séquences d'activation de soupape avec impulsion-pause, une pause entre deux impulsions de réduction de pression étant déterminée en fonction d'une vitesse de référence de véhicule et du patinage de roue et éventuellement d'une grandeur de base constante selon la relation suivante

$$\Delta T \ = \ T_B \ - \ k_1 * \ v_{ref} \ + \ k_2 * \lambda_{fil}$$

avec

$T_B$ : grandeur de base
$k_1$, $k_2$ : facteurs d'amplification
$v_{ref}$ : vitesse de référence de véhicule
$\lambda_{fil}$ : patinage de roue (filtré).

2. Procédé selon la revendication 1, **caractérisé en ce que** le comportement au patinage des roues est observé pour la détermination de la pause comme partie soustractive et **en ce qu'**une progression ou une dégression d'un compteur est effectuée en fonction du comportement au patinage selon la condition suivante

$$k_3 * stab_{counter}$$

avec

$k_3$ : facteur d'amplification
$stab_{counter}$ : compteur pour l'observation du comportement au patinage.

3. Procédé selon la revendication 1 ou 2, **caractérisé en ce que**
une partie décrivant une différence de couple entre un moment d'axe actuel et un moment d'axe filtré est prise en compte de façon soustractive selon la condition suivante

$$k_4 * \Delta ActTq$$

avec

$\Delta ActTq = ActTq_{fil} - ActTq$ et
$k_4$ : facteur d'amplification
$ActTq_{fil}$ : moment d'axe (filtré)
$ActTq$ : moment d'axe (actuel).

4. Procédé selon la revendication 1, 2 ou 3, **caractérisé en ce que** le régime du moteur et la variation du régime du moteur sont pris en compte de façon soustractive selon la condition suivante

$$k_5 \left[ k_p * \left( N_{soll} - N \right) + k_d * \Delta N \right]$$

avec

$k_5$, $k_p$, $k_a$ : facteurs d'amplification
$N_{soll}$ : régime prévu du moteur
$N$ : régime réel du moteur
$\Delta N$ variation du régime du moteur.

5. Procédé selon la revendication 1, 2, 3 ou 4, **caractérisé en ce que** le régulateur électronique repose sur un modèle de régulateur avec des parties linéaires (parties P) et parties intégrales (parties I) et éventuellement des parties différentielles (partie D, éléments de temps mort).

6. Procédé selon la revendication 1, 2, 3 ou 4, **caractérisé en ce que** les facteurs d'amplification ($k_{1-5}$, $k_p$, $k_d$) sont déterminés en fonction de l'état de conduite du véhicule identifié.

7. Procédé selon la revendication 1, **caractérisé en ce qu'**un abaissement du seuil de réglage est effectué après l'identification d'un état de conduite soumis au patinage d'entraînement.

8. Procédé selon la revendication 1, **caractérisé en ce que** la fonction de blocage de différentiel est rendue vraisemblable à l'aide de la vitesse de référence du véhicule et à l'aide d'une reconnaissance du parcours en virage et **en ce qu'**une désactivation de la fonction de blocage de différentiel intervient en cas d'invraisemblance.

9. Procédé selon la revendication 1, **caractérisé en ce que** la fonction de blocage de différentiel est désactivée lorsqu'un état de conduite est identifié, dans lequel toutes les roues se trouvent sur une valeur de faible frottement ou si l'on fait une identification sur le parcours en virage.

10. Procédé selon la revendication 8 ou 9, **caractérisé en ce que**, en complément de la stratégie de régulation de traction sur la base d'états de conduite identifiés, une stratégie de régulation de traction sur la base de valeurs de patinage individuelles par roue est prévue, et **en ce que** la régulation s'effectue sur la base de valeurs de patinage individuelles par roue lorsque la fonction de blocage de différentiel a été désactivée, en particulier lorsqu'un état de conduite a été identifié dans lequel toutes les roues se trouvent sur une valeur de faible frottement.

11. Procédé selon la revendication 1, **caractérisé en ce que** les informations de rotation de roues d'entraînement régulées au niveau de la traction ne sont pas utilisées pour déterminer la vitesse de référence du véhicule et **en ce que**, en cas d'identification d'une intervention de régulation de traction sur toutes les roues, la roue d'entraînement avec le couple de freinage le plus faible dû à une régulation de traction est utilisée pour la détermination de la vitesse de référence du véhicule.

# Fig. 1

## IN DER BESCHREIBUNG AUFGEFÜHRTE DOKUMENTE

**In der Beschreibung aufgeführte Patentdokumente**

- DE 3421776 C2
- DE 19953773 A1
- DE 10027628 A1

**In der Beschreibung aufgeführte Nicht-Patentliteratur**

- Fachbuch Fahrsicherheitssysteme. 1998, 75 ff
- *Fachzeitschrift ATZ,* vol. 102 (9), 764-773